# FASCICULE DE BREVET EUROPEEN

(11) **EP 0 624 841 B1**
(45) Date de publication et mention de la délivrance du brevet: **24.02.1999**
(21) Numéro de dépôt: 94401020.6
(22) Date de dépôt: 09.05.1994
(51) Int. Cl.: G06F 9/44

(54) **Mécanisme de filtrage de règles de production et moteur d'inférence pour système expert comportant un tel mécanisme**
Mechanismus zur Filterung von Produktionsregeln und Inferenzmaschine für Expertensystem mit einem solchen Mechanismus
Mechanism for filtering production rules and inference machine for expert system having such a mechanism

(30) Priorité: 14.05.1993 FR 9305834
(43) Date de publication de la demande: 17.11.1994
(73) Titulaire: ALCATEL, 75008 Paris (FR)
(72) Inventeur: Paillet, Olivier, F-92200 Neuilly (FR)
(74) Mandataire: Fournier, Michel

(56) Documents cités:
- EP-A- 0 314 650
- US-A- 5 265 193
- PROC. SIXTH NAT. CONF. ON ARTIFICIAL INTELLIGENCE vol. 1 , 13 Juillet 1987 pages 42 - 47 DANIEL P. MIRANKER 'TREAT: A better match algorithm for AI production systems'

## Description

L'invention porte sur un mécanisme de filtrage de règles de production exprimant des conditions à satisfaire, destiné à identifier au cours de cycles d'inférence successifs de règles, la ou les règles dont les conditions sont satisfaites pour des faits déduits et comprenant un système de tri pour ordonner les conditions des règles en fonction d'un critère de tri de manière à vérifier les conditions des règles sur la base d'un ordre de prise en compte desdites conditions.

Un tel mécanisme de filtrage est connu du document TSI Vol.5 n°3, juin 1986, "Un langage déclaratif: SNARK", J.L. Laurière. Ce type de mécanisme de filtrage est conçu en premier lieu pour les systèmes informatisés d'aide à la décision, plus connus sous le nom de systèmes experts. Un système expert comprend classiquement trois éléments qui sont une première mémoire de travail ou base de faits contenant des faits déduits, une seconde mémoire de travail ou base de connaissance contenant un ensemble de règles de production exprimant chacune une ou des conditions à satisfaire en relation avec une ou des conclusions à déduire, et une procédure de déduction ou moteur d'inférence.

Les systèmes experts sont largement utilisés dans l'industrie, notamment pour établir un diagnostic de pannes de fonctionnement d'une installation.

La procédure de déduction est généralement agencée pour effectuer un cycle d'inférence en trois étapes: filtrage, résolution de conflits et inférence. L'étape de filtrage consiste à déterminer les règles de production dont les conditions sont satisfaites pour des faits dans la base de faits. L'étape de résolution des conflits consiste à effectuer une sélection parmi les règles déclarées candidates par l'étape de filtrage. L'étape d'inférence consiste à ajouter, retirer ou modifier des faits dans la base de faits en accord avec la ou les conclusions des règles retenues dans l'étape de résolution de conflits.

L'efficacité de l'étape de filtrage a une influence déterminante sur l'efficacité du processus de déduction car elle consomme fréquemment plus de 80% du temps de traitement total à chaque cycle d'inférence.

Dans le document mentionné ci-dessus, la procédure de déduction inclut un mécanisme de filtrage de règles de production comprenant un système de tri pour ordonner les conditions des règles en fonction d'un critère de tri de manière à vérifier les conditions des règles sur la base d'un ordre de prise en compte desdites conditions. Le critère de tri utilisé consiste à considérer que la condition devant être prise en compte la première, pour une règle donnée, est celle qui est la moins souvent satisfaite pour les faits déduits. L'ordonnancement des conditions des règles permet de réduire le temps de traitement nécessaire à l'étape de filtrage. Ce mécanisme connu de filtrage déclenche le système de tri à chaque cycle d'inférence. Il en résulte qu'un tel mécanisme de filtrage consomme beaucoup de temps de traitement du fait que le système de tri est lui-même un grand consommateur de temps de traitement. Par ailleurs, il a été constaté que dans 99% des cas, le système de tri ordonne, lors d'un cycle d'inférence, les conditions des règles selon le même ordre de prise en compte que lors du cycle précédent du fait que les faits déduits changent peu entre deux cycles d'inférence consécutifs. Il n'est donc pas utile de déclencher le système de tri à chaque cycle d'inférence. L'invention a pour but de remédier à cet inconvénient.

Un autre mécanisme de filtrage est connu du document AAAI, National Conference on Artificial Intelligence, 1987, "TREAT: a better match algorithm for AI production systems", D.P. Miranker. Ce mécanisme de filtrage utilise une représentation des conditions des règles de production sous forme d'un réseau de discrimination dont chaque noeud représente un modèle de condition d'une ou plusieurs règles de production. Un tel réseau de discrimination est particulièrement avantageux à utiliser lorsque les conditions des règles contiennent des variables communes. Quand une condition contient n variables, le noeud du réseau correspondant à cette condition mémorise les valeurs des n-uplets de faits de la base de fait qui satisfont la condition. Les arcs du réseau de discrimination représentent les conjonctions définies, lors de l'écriture des règles de production, entre les conditions des règles. Pour déterminer les règles de production dont toutes les conditions sont satisfaites pour les faits dans la base de fait, le mécanisme de filtrage établit des jointures successives entre les n-uplets de valeurs mémorisées dans les noeuds du réseau de discrimination. Le mécanisme de filtrage connu du document précité comporte un système de tri qui ordonne partiellement les noeuds dans le réseau de discrimination. Ce système de tri est agencé de manière à ce que l'étape de jointure, lors d'un cycle courant d'inférence, entre deux noeuds du réseau de discrimination correspondant à deux conditions d'une règle de production, commence par le noeud correspondant à la condition impliquée par un nouveau fait déduit lors du cycle d'inférence précédent immédiatement le cycle courant d'inférence. L'ordre de prise en compte des noeuds du réseau correspondant aux autres conditions de la règle reste identique à celui qui a été défini lors de l'écriture de la règle. On constate que le temps de traitement nécessaire à la réalisation des jointures dépend de l'ordre dans lequel les jointures entre noeuds du réseau sont réalisées. Ce temps de traitement nécessaire à la réalisation des jointures peut être grandement réduit si l'ordre de prise en compte des noeuds est calculé rapidement pour tous les noeuds impliqués lors de l'étape de réalisation de la jointure. L'invention a aussi pour but d'améliorer un tel mécanisme de filtrage.

A cet effet, l'invention a pour objet un mécanisme de filtrage, caractérisé en ce que le mécanisme de filtrage est agencé pour déclencher le système de tri des conditions des règles uniquement lorsque le nombre de faits satisfaisant une condition d'une règle est multiplié ou divisé par un facteur réglable K entre le cycle courant d'inférence et le dernier cycle précédent d'inférence au cours duquel le système de tri a été déclenché pour cette règle.

Un tel mécanisme de filtrage consomme beaucoup moins de temps que les mécanismes de filtrage connus. Il peut être intégré à un moteur d'inférence d'un système expert exploité pour établir des diagnostics de pannes dans des situations d'urgence.

Le système de tri est agencé pour enregistrer, pour chaque condition d'une règle, une liste ordonnée des autres conditions de la règle de sorte qu'un ordre optimal mémorisé de prise en compte des conditions d'une règle peut être réutilisé lors de cycles d'inférence ultérieurs jusqu'à ce que cet ordre ne soit plus optimal par suite de la modification, la suppression ou l'ajout de faits dans la base de faits. Dans ce cas, la liste ordonnée des conditions de la règle est réorganisée par le système de tri.

Le critère de tri des conditions d'une règle peut être défini en fonction du renouvellement des faits entre deux cycles successifs d'inférence et en fonction du fait que certaines conditions ne comportent pas ou comportent des variables.

Pour ce critère de tri, la première condition de la règle qui est prise en compte est celle qui doit être vérifiée pour un nouveau fait déduit.

L'invention s'étend à un moteur d'inférence pour système expert, comportant un tel mécanisme de filtrage de règles de production.

L'invention est décrite en détail ci-après en référence aux dessins.

La figure 1 représente schématiquement un système expert comprenant une base de fait, une base de connaissance, une mémoire de filtrage et un moteur d'inférence incluant un mécanisme de filtrage selon l'invention.

La figure 2 représente schématiquement le modèle conceptuel des données du mécanisme de filtrage selon l'invention.

La figure 3 est un organigramme fonctionnel du mécanisme de filtrage selon l'invention incluant un système de tri.

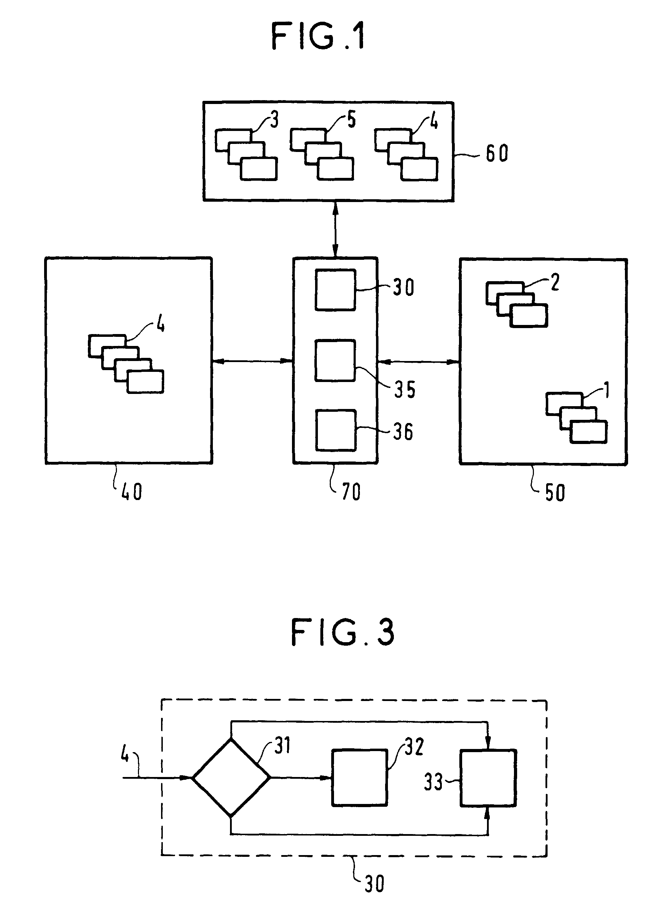

Le système expert représenté à la figure 1 est destiné à faire fonctionner un ordinateur équipé d'un clavier pour entrer des données et d'un dispositif d'affichage sur lequel sont présentées des résultats de diagnostic de façon classique en soi. Ce système expert comprend une base de faits 40 contenant des faits 4, une base de connaissances 50 contenant des conditions 2 et des règles 1, une mémoire de filtrage 60 contenant des modèles de condition 3, des instances de règle 5 et les faits déduits 4 lors du dernier cycle d'inférence, et un moteur d'inférence 70.

Le moteur d'inférence comprend un mécanisme de filtrage 30, un mécanisme de sélection de règles 35, un mécanisme de déduction 36. les mécanisme 35 et 36 sont classiques en soi et ne seront donc pas décrits.

Pour plus de clarté, le modèle conceptuel des données exploitées par le mécanisme de filtrage est d'abord décrit.

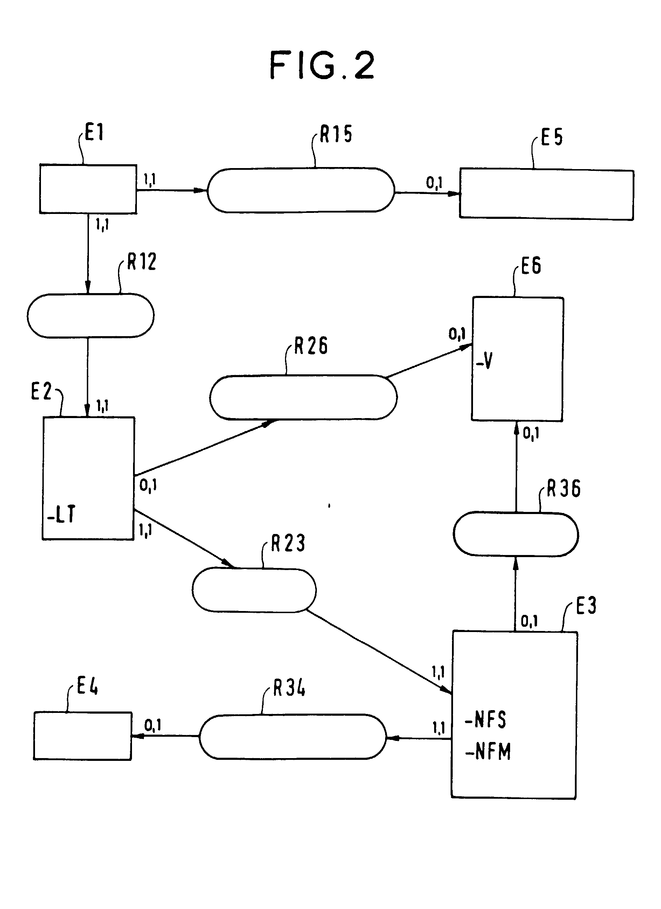

Sur la figure 2, le modèle conceptuel (dans le formalisme entité relation de la méthode "MERISE") comprend 6 entités (désignées chacune par le symbole E et représentées par des pavés rectangulaires) et 7 relations (désignées chacune par le symbole R et représentées par des pavés ovales) entre ces entités. L'entité E1 ("Règle") décrit l'ensemble des règles de production du système expert. L'entité E2 ("Condition") décrit l'ensemble de toutes les conditions des règles de production, ces conditions peuvent inclure des variables identifiées par un nom. L'entité E3 ("Modèle_de_condition") représente des conditions analogues au nom de leurs variables près, connue sous le nom de "ALPHA_Memory" du document "Rete: a fast algorithm for the many pattern/many object pattern match problem" de Charles L. FORGY, Artificial Intelligence n°19-1992. L'entité E4 ("Fait") décrit l'ensemble des faits du système expert. L'entité E5 ("Instance_de_règle") décrit un ensemble de faits satisfaisant les conditions d'une règle.

La relation R12 ("A_pour_condition") associe les entités E1 et E2 dans laquelle à une règle peut être associée une à n conditions et à une condition peut être associée une et une seule règle par la relation inverse. La relation R23 ("Correspond") associe les entités E2 et E3 dans laquelle à une condition est associé un et un seul modèle de condition et à un modèle de condition est associé une à n conditions par la relation inverse. La relation R15 ("A_pour_Instance") associe les entités E1 et E5 dans laquelle à une règle est associée zéro à n instances de règle et à une instance de règle est associée une et une seule règle par la relation inverse. La relation R34 ("Est_vérifiée_par") associe les entités E3 et E4 dans laquelle à un modèle de condition est associé zéro à n faits et à un fait est associé un et un seul modèle de condition par la relation inverse. La relation R26 ("Comprend_les_variables") associe les entités E2 et E6 dans laquelle à une condition correspond zéro à n variables et une variable figure dans une à n conditions par la relation inverse. La relation R36 ("A_pour_variable") associe les entités E3 et E6 dans laquelle à un modèle de condition correspond zéro à n variables et à une variable correspond un modèle de condition seulement par la relation inverse.

Les relations entre entités sont classiquement réalisées par l'utilisation de pointeurs, les entités étant des objets d'un langage de programmation orientée objet tel que C++ ou des structures dans un langage de programmation fonctionnel tel que C.

En plus des propriétés classiques décrivant ces entités et relations nécessaires au fonctionnement d'un moteur d'inférence classique, les propriétés suivantes sont ajoutées.

A l'entité E2 ("Condition") est ajoutée une propriété LT ("Liste_triée") dont la valeur est une liste ordonnée de conditions.

A l'entité E3 ("Modèle_de_condition") sont ajoutées deux propriétés à savoir:
- la propriété NFS dont la valeur est un entier égal au nombre de faits satisfaisant ce modèle de condition;
- la propriété NFM dont la valeur est un entier égal à une valeur de NFS mémorisée à un certain instant.

A l'entité E6 ("Variable") est ajoutée une propriété V ("Valeurs") dont la valeur est l'ensemble des valeurs différentes de la variable considérée.

En se reportant maintenant à la figure 3, le mécanisme de filtrage 30 inclut un module de décision 31, un module de tri 32 et un module de filtrage proprement dit 33.

Le module de décision 31 prend en entrée un fait déduit 4. A partir de ce fait, il récupère par la relation R34 le modèle de condition 3 qui lui correspond. Il met à jour la liste des valeurs V des variables du modèle de condition récupérées par la relation R36 puis recalcule le nombre de faits NFS satisfaisant ce modèle de condition. Il compare le rapport NFS/NFM à un seuil réglable K enregistré préalablement. De préférence le seuil K prend des valeurs comprises entre 1,5 et 2.

Si 1/K < NFS/NFM < K, le module de décision récupère par la relation R23 inversée la ou les conditions correspondant à ce modèle. Pour chacune de ces conditions, si la propriété "liste_triée" n'a pas une valeur nulle, il déclenche le module de filtrage 33 et dans le cas contraire il déclenche le module de tri 32 avant de déclencher le module de filtrage 33.

Si NFS/NFM > K ou NFS/NFM < 1/K, le module décision remplace la valeur NFM par la valeur NFS. A partir du modèle de condition, il récupère les conditions par la relation R23 inversée qui correspondent à ce modèle. Pour chaque condition récupérée, il déclenche le module de tri 32 puis le module de filtrage 33.

Le module de tri 32 prend en entrée une condition 2. A partir de cette condition 2 il récupère par la relation R12 inversée la règle 1 qui inclut cette condition et à partir de cette règle, il récupère par la relation R12 toutes les conditions de cette règle. Il ordonne ces conditions dans une liste LT de conditions en exploitant l'algorithme de tri suivant:
a) la première condition est la condition d'entrée du module de tri.
b) et de façon itérative sur toutes les autres conditions, la condition suivante dans la liste ordonnée est celle qui satisfait l'un des critères suivants et dans l'ordre de préférence suivant:
   i)une condition ne comportant pas de variable;
   ii)une condition comportant au moins une variable dont la ou les variables sont présentes dans une condition déjà inscrite dans la liste de conditions;
   iii)une condition comportant au moins une variable et dont le modèle de condition récupéré par la relation R23 a la valeur NFS la plus faible, cette valeur NFS étant remplacée par une valeur NFC définie plus loin lorsque certaines variables de la condition considérée sont présentes dans une condition déjà inscrite dans la liste, ces variables étant dites contraintes. La valeur NFC ou nombre de faits contraints pour cette condition est obtenue en récupérant par la relation 36, pour chaque variable contrainte, le nombre de ses valeurs (cardinal de l'ensemble des valeurs) puis en divisant NFS par le minimum de tous ces nombres. Le module de tri 32 fournit en sortie une liste ordonnée des conditions qui est mémorisée dans la propriété LT ("liste_triée") de la condition d'entrée.

Le module de filtrage 33 prend en entrée une règle 1 et une condition 2 de cette règle. Il récupère la liste ordonnée des conditions de la règle mémorisée dans la propriété LT ("liste_triée") de cette condition. Il effectue ensuite, de façon classique comme décrit dans le document "TREAT: a better match algorithm for AI production systems" de Daniel P. MIRANKER, National Conference of Artificial Intelligence 1987, le calcul des instances de règle 5 de la règle d'entrée 1 mais en considérant les conditions dans l'ordre dans lequel elles apparaissent dans la liste ordonnée des conditions.

## Revendications

1. Un mécanisme de filtrage de règles de production exprimant des conditions (2) à satisfaire, destiné à identifier au cours de cycles d'inférence successifs de règles (1), la ou les règles dont les conditions sont satisfaites pour des faits déduits (4) et comprenant un système de tri (32) pour ordonner les conditions des règles en fonction d'un critère de tri de manière à vérifier les conditions des règles sur la base d'un ordre de prise en compte desdites conditions, caractérisé en ce que le mécanisme de filtrage est agencé pour déclencher le système de tri des conditions des règles uniquement lorsque le nombre de faits satisfaisant une condition d'une règle est multiplié ou divisé dans un rapport supérieur à un facteur réglable K entre le cycle courant d'inférence et le dernier cycle précédent d'inférence au cours duquel le système de tri a été déclenché pour cette règle.

2. Le mécanisme selon la revendication 1, dans lequel le système de tri est agencé pour enregistrer, pour chaque condition d'une règle, une liste ordonnée des autres conditions de la règle.

3. Le mécanisme selon l'une des revendications 1 ou 2, dans lequel le critère de tri des conditions d'une règle est défini de la façon suivante:
a) la première condition de la règle est celle qui doit être vérifiée pour un nouveau fait déduit;
b) la condition suivante est sélectionnée parmi les conditions restantes de la règle, cette condition suivante étant celle qui satisfait l'un des critères suivants et dans l'ordre de préférence suivant:
i)une condition ne comportant pas de variable;
ii)une condition comportant au moins une variable dont la ou les variables sont présentent dans une condition déjà sélectionnée;
iii)une condition comportant au moins une variable et dont le nombre de faits contraints est le plus petit.

4. Un mécanisme de filtrage de règles de production selon l'une des revendications précédentes, utilisé par le moteur d'inférence d'un système expert.

5. Un moteur d'inférence pour système expert, comportant un mécanisme de filtrage de règles de production exprimant des conditions (2) à satisfaire, destiné à identifier au cours de cycles d'inférence successifs de règles (1), la ou les règles dont les conditions sont satisfaites pour des faits déduits (4) et comprenant un système de tri (32) pour ordonner les conditions des règles en fonction d'un critère de tri de manière à vérifier les conditions des règles sur la base d'un ordre de prise en compte desdites conditions, tel que le mécanisme de filtrage est agencé pour déclencher le système de tri des conditions des règles uniquement lorsque le nombre de faits satisfaisant une condition d'une règle est multiplié ou divisé dans un rapport supérieur à un facteur réglable K entre le cycle courant d'inférence et le dernier cycle précédent d'inférence au cours duquel le système de tri a été déclenché pour cette règle.

## Patentansprüche

1. Mechanismus zur Filterung von Produktionsregeln, die zu erfüllende Bedingungen (2) ausdrücken, der dazu bestimmt ist, während aufeinanderfolgender Inferenzzyklen von Regeln (1) die Regel oder Regeln zu identifizieren, deren Bedingungen für abgeleitete Ereignisse (4) erfüllt sind, und ein Sortiersystem (32) umfaßt, um die Bedingungen der Regeln in Abhängigkeit von einem Sortierkriterium zu ordnen, um die Bedingungen der Regeln auf der Basis einer Reihenfolge der Berücksichtigung der Bedingungen zu verifizieren, dadurch gekennzeichnet, das der Filterungsmechanismus dafür eingerichtet ist, das Sortiersystem für die Bedingungen der Regeln nur dann zu triggern, wenn die Zahl der eine Bedingung einer Regel erfüllenden Ereignisse in einem Verhältnis größer als ein einstellbarer Faktor K zwischen dem laufenden Inferenzzyklus und dem letzten vorhergehenden Inferenzzyklus, während dessen das Sortiersystem für diese Regel getriggert wurde, multipliziert oder dividiert wird.

2. Mechanismus nach Anspruch 1, bei dem das Sortiersystem dafür eingerichtet ist, für jede Bedingung einer Regel eine geordnete Liste der anderen Bedingungen der Regel zu erfassen.

3. Mechanismus nach einem der Ansprüche 1 oder 2, bei dem das Sortierkriterium für die Bedingungen einer Regel folgendermaßen definiert ist:
a) die erste Bedingung der Regel ist diejenige, die für ein neues abgeleitetes Ereignis verifiziert werden muß,
b) die folgende Bedingung wird unter den restlichen Bedingungen der Regel ausgewählt, wobei diese folgende Bedingung diejenige ist, die eines der folgenden Kriterien erfüllt und in der folgenden bevorzugten Reihenfolge:
i) eine Bedingung, die keine Variable aufweist,
ii) eine Bedingung die wenigstens eine Variable aufweist, deren variable oder Variablen in einer bereits ausgewählten Bedingung vorhanden sind,
iii) eine Bedingung, die wenigstens eine Variable aufweist und deren Zahl an Zwangsereignissen die geringste ist.

4. Mechanismus zur Filterung von Produktionsregeln nach einem der vorhergehenden Ansprüche, der von der Inferenzmaschine eines Expertensystems verwendet wird.

5. Inferenzmaschine für ein Expertensystem, die einen Mechanismus zur Filterung von Produktionsregeln umfaßt, die zu erfüllende Bedingungen (2) ausdrücken, der dazu bestimmt ist, während aufeinanderfolgender Inferenzzyklen von Regeln (1) die Regel oder Regeln zu identifizieren, deren Bedingungen für abgeleitete Ereignisse (4) erfüllt sind, und ein Sortiersystem (32) umfaßt, um die Bedingungen der Regeln in Abhängigkeit von einem Sortierkriterium zu ordnen, um die Bedingungen der Regeln auf der Basis einer Reihenfolge der Berücksichtigung der Bedingungen zu verifizieren, so daß der Filterungsmechanismus dafür eingerichtet ist, das Sortiersystem für die Bedingungen der Regeln nur dann zu triggern, wenn die Zahl der eine Bedingung einer Regel erfüllenden Ereignisse in einem Verhältnis größer als ein einstellbarer Faktor K zwischen dem laufenden Inferenzzyklus und dem letzten vorhergehenden Inferenzzyklus, während dessen das Sortiersystem für diese Regel getriggert wurde, multipliziert oder dividiert wird.

## Claims

1. A mechanism for filtering production rules expressing conditions (2) to be satisfied adapted to identify during successive inference cycles (1) rule(s) whose conditions are satisfied for deduced facts (4) and comprising a sorting system (32) for ordering the conditions of the rules in accordance with a sorting criterion in order to verify the conditions of the rules on the basis of an order to take account of said conditions, characterised in that the filter mechanism is adapted to activate the system for sorting the conditions of the rules only if the number of facts which satisfy a condition of a rule is multiplied or divided in a ratio greater than a variable factor K between the current inference cycle and the last preceding inference cycle during which the sorting system was activated for this rule.

2. The mechanism according to claim 1 wherein said sorting system is adapted to memorise an ordered list of the other conditions of said rule for each condition of a rule.

3. The mechanism according to claim 1 or claim 2 wherein the criteria for sorting the conditions of a rule is defined as follows:
a) the first condition of the rule is the one which must be verified for a new deduced fact;
b) the next condition is selected from the remaining conditions of the rule, this condition being the one which satisfies one of the following criteria in the following order of preference:
i) a condition that does not include any variable;
ii) a condition including at least one variable present in a condition already selected;
iii) a condition including at least one variable and for which the number of constrained facts is the smallest.

4. A mechanism for filtering production rules according to any one of the preceding claims used by the inference engine of an expert system.

5. An expert system inference engine comprising a mechanism for filtering production rules expressing conditions (2) to be satisfied, adapted to identify during successive inference cycles (1) rule(s) whose conditions are satisfied for deduced facts (4) and comprising a sorting system (32) for ordering the conditions of the rules in accordance with a sorting criterion in order to verify the conditions of the rules on the basis of an order to take account of said conditions, such that the filter mechanism is adapted to activate the system for sorting the conditions of the rules only if the number of facts which satisfy a condition of a rule is multiplied or divided in a ratio greater than a variable factor K between the current inference cycle and the last preceding inference cycle during which the sorting system was activated for this rule.
